# EUROPEAN PATENT APPLICATION

(11) **EP 4 800 832 A1**
(43) Date of publication of application: **02.09.2026**
(21) Application number: 23956582.3
(22) Date of filing: 10.11.2023
(51) Int. Cl.: H01M 50/586, H01M 50/593

(54) **BATTERY CELL, BATTERY, AND ELECTRIC DEVICE**

(30) Priority: 26.10.2023 CN 202322899865 U
(71) Applicant: AESC Shanghai Co., Ltd., Shanghai 201315 (CN); AESC Jiangsu Co., Ltd., Wuxi, Jiangsu 214443 (CN)
(72) Inventor: YU, He, Wuxi, Jiangsu 214443 (CN); CAO, Shengrong, Wuxi, Jiangsu 214443 (CN); ZHENG, Haoxian, Wuxi, Jiangsu 214443 (CN); SUN, Zhenbiao, Wuxi, Jiangsu 214443 (CN)
(74) Representative: Becker, Eberhard
(86) International application number: PCT/CN2023/130968
(87) International publication number: WO 2025/086345

(57) **Abstract**

The present disclosure relates to the technical field of batteries, and provides a battery cell, a battery, and an electric device. The battery cell comprises: a casing, a first cover plate, a first terminal, an electrode assembly, a first insulating member, and a first insulating support. The casing comprises a first opening; the first cover plate is sealingly mounted on the first opening; the first terminal is mounted on the first cover plate; the electrode assembly is arranged in the casing, a first tab extends from the side of the electrode assembly close to the first cover plate, at least part of the first tab is fixedly connected to the first terminal, and a first tab free end is formed; the first insulating member is mounted on the side of the first cover plate close to the electrode assembly; and the first insulating support is arranged between the first insulating member and the electrode assembly, wherein the first tab free end is provided with an insulating structure. The insulating structure in the present disclosure insulates and isolates the first tab free end from the casing, and there is no need to carry out a tab cutting process, reducing the production costs, and improving the safety performance of the battery.

## Description

### Technical Field

The present disclosure relates to the technical field of batteries and specifically relates to a battery cell, a battery, and an electric device.

### Description of Related Art

In existing battery cells, to avoid contact between the tab and the casing, an insulating member and an insulating support are usually arranged between the tab and the casing. After welding, the redundant free ends of multiple tab pieces can still easily extend out from the gaps between the insulating member and the insulating support and contact the inner wall of the casing. This causes the tab to be electrically conductive with the casing, leading to a short circuit in the battery cell, which reduces battery safety and poses a safety hazard.

### SUMMARY

In view of the abovementioned shortcomings of the related art, the present disclosure provides a battery cell, a battery, and an electric device, so as to improve the technical problem of short-circuit risk in a battery cell of the related art where a tab piece extends out from a gap between an insulating member and an insulating support and contacts an inner wall of a casing.

To achieve the above and other related purposes, the present disclosure provides a battery cell, and the battery cell includes: a casing, a first cover plate, a first terminal, an electrode assembly, a first insulating member, and a first insulating support. The casing includes a first opening. The first cover plate is sealingly mounted on the first opening. The first terminal is mounted on the first cover plate. The electrode assembly is arranged in the casing, a first tab extends from a side close to the first cover plate, at least part of the first tab is fixedly connected to the first terminal, and a first tab free end is formed. The first insulating member is mounted on a side of the first cover plate close to the electrode assembly. The first insulating support is arranged between the first insulating member and the electrode assembly, and the first tab free end is provided with an insulating structure.

In the battery cell provided by an example of the present disclosure, the insulating structure covers the first tab free end.

In the battery cell provided by an example of the present disclosure, the insulating structure includes an insulating tape, and the insulating tape is adhered to the first tab free end.

In the battery cell provided by an example of the present disclosure, a peel strength of the insulating tape is 9 N/mm to 18 N/mm.

In the battery cell provided by an example of the present disclosure, the first tab free end includes a staggered region, and the insulating tape covers the staggered region.

In the battery cell provided by an example of the present disclosure, one end of the insulating tape is adhered to a surface of the first tab free end close to the first terminal, and another end of the insulating tape is adhered to a surface of the first tab away from the first terminal and close to a root portion of the first tab.

In the battery cell provided by an example of the present disclosure, a connection region between the first tab and the first terminal is a connection zone, and on a connection surface of the first tab and the first terminal, an orthographic projection of the connection zone is within an orthographic projection of the insulating tape.

In the battery cell provided by an example of the present disclosure, in a direction perpendicular to an extending direction of the first tab, a width D₁ of the insulating tape is greater than a width D₂ of the first tab.

In the battery cell provided by an example of the present disclosure, the first insulating support includes a first tab gathering structure.

In the battery cell provided by an example of the present disclosure, the first tab gathering structure includes a first protruding portion, and the first protruding portion extends from a side of the first insulating support away from the first tab free end toward a side close to the first tab free end.

The present disclosure further provides a battery, and the battery includes the battery cell according to any one of the above.

The present disclosure further provides an electric device, and the electric device includes the battery cell according to any one of the above.

In the battery cell, the battery, and the electric device of the present disclosure, the first tab free end is covered with the insulating structure. On one hand, the insulating structure increases the thickness of the first tab free end, so that the possibility of the first tab free end extending into the gap between the first insulating member and the first insulating support is lowered. On the other hand, even if the first tab free end extends into the gap between the first insulating member and the first insulating support, the insulating structure can insulate and isolate the first tab free end from the casing, and the short-circuit risk is thus avoided. Further, through the arrangement of the insulating structure, a tab cutting process is no longer required. In this way, the problems of debris generated from cutting redundant tabs damaging the internal structure of the battery cell and causing short circuit are avoided, production costs are reduced, and safety performance of the battery is improved.

### BRIEF DESCRIPTION OF THE DRAWINGS

To make the technical solutions provided in the embodiments of the present disclosure or the related art more clearly illustrated, several accompanying drawings required by the embodiments or the related art for description are briefly introduced as follows. Obviously, the drawings in the following description are merely some embodiments of the present disclosure, and for a person having ordinary skill in the art, other drawings can be obtained based on these drawings without an inventive effort.
FIG. 1 is a cross-sectional schematic view of a side of a first cover plate in a battery cell according to an embodiment of the present disclosure.
FIG. 2 is an enlarged view of a region A in FIG. 1.
FIG. 3 is a schematic view after welding of a first tab and a first terminal in the battery cell is completed according to an embodiment of the present disclosure.
FIG. 4 is an enlarged view of a region B in FIG. 3.
FIG. 5 is a front view of a first insulating support in the battery cell according to an embodiment of the present disclosure.
FIG. 6 is a structural schematic view of a staggered region in the battery cell according to an embodiment of the present disclosure.
FIG. 7 is a structural schematic view of a first tab free end covered with an insulating tape in the battery cell according to an embodiment of the present disclosure.
FIG. 8 is a structural schematic view of a battery according to an embodiment of the present disclosure.
FIG. 9 is a structural schematic view of an electric device according to an embodiment of the present disclosure.

Description of reference numerals of the elements
1: electric device, 10: battery, 11: working portion, 101: box body, 102: box cover, 100: battery cell, 110: casing, 111: first opening, 120: first cover plate, 130: electrode assembly, 131: first tab, 132: first tab free end, 133: staggered region, 140: first terminal, 150: first insulating member, 160: first insulating support, 170: first tab gathering structure, 171: first protruding portion, 172: second protruding portion, 173: first groove, 174: second groove, 200: insulating structure, 201: insulating tape, 210: one end, 220: another end.

### BRIEF DESCRIPTION OF THE DRAWINGS

The implementation of the present disclosure is illustrated below by specific embodiments. A person having ordinary skill in the art can easily understand other advantages and effects of the present disclosure from the content disclosed in this specification. The present disclosure can also be implemented or applied through other different specific implementation ways. The details in this specification can also be modified or changed based on different viewpoints and applications without departing from the spirit of the present disclosure. Note that the following embodiments and the features in the embodiments may be combined with each other in the case of no conflict. It should also be understood that the terminology used in the embodiments of the present disclosure is for describing a specific implementation, but not for limiting the protection scope of the present disclosure. The test methods for which specific conditions are not indicated in the following embodiments are usually in accordance with conventional conditions or in accordance with the conditions suggested by each manufacturer.

When the numerical ranges are given in the embodiments, it should be understood that, unless otherwise stated in the present disclosure, the two endpoints of each numerical range and any numerical value between the two endpoints may be selected. Unless otherwise defined, all technical and scientific terms used in the present disclosure are consistent with the grasp of the related art by a person having ordinary skill in the art and the content of the present disclosure. Any method, device, and material in the related art similar or equivalent to the methods, devices, and materials described in the embodiments of the present disclosure may also be used to implement the present disclosure.

It should be noted that terms such as "upper", "lower", "left", "right", "middle" and "one" quoted in this specification are only for the convenience of description and are not used to limit the applicable scope of the present disclosure. The change or adjustment of its relative relationship should also be regarded as the applicable scope of the present disclosure without substantive change of the technical content.

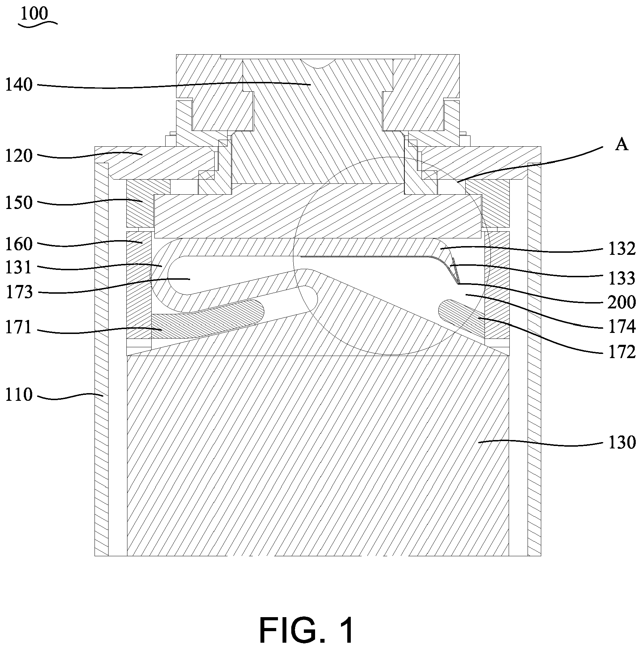

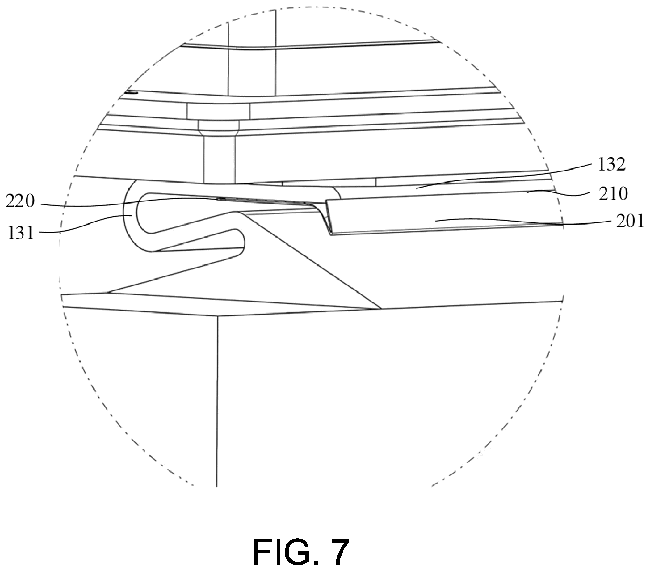

Referring to FIG. 1 to FIG. 9, the present disclosure provides a battery cell, a battery, and an electric device. In a battery cell 100, a first tab free end 132 is covered with an insulating structure 200. On one hand, the insulating structure 200 may increase a thickness of the first tab free end 132, so that the possibility of the first tab free end 132 extending into a gap between a first insulating member 150 and a first insulating support 160 is lowered. On the other hand, even if the first tab free end 132 extends into the gap between the first insulating member 150 and the first insulating support 160, the insulating structure 200 may also insulate and isolate the first tab free end 132 from the casing 110. Further, through the arrangement of the structure, a tab cutting process is no longer required. In this way, the problems of debris generated from cutting redundant tabs damaging the internal structure of the battery cell 100 and causing short circuit are avoided, production costs are reduced, and safety performance of the battery is improved.

Referring to FIG. 1, FIG. 1 is a cross-sectional schematic view of a side of a first cover plate in a battery cell according to an embodiment of the present disclosure. The present disclosure provides a battery cell, and the battery cell 100 includes: a casing 110, a first cover plate 120, a first terminal 140, an electrode assembly 130, a first insulating member 150, and a first insulating support 160.

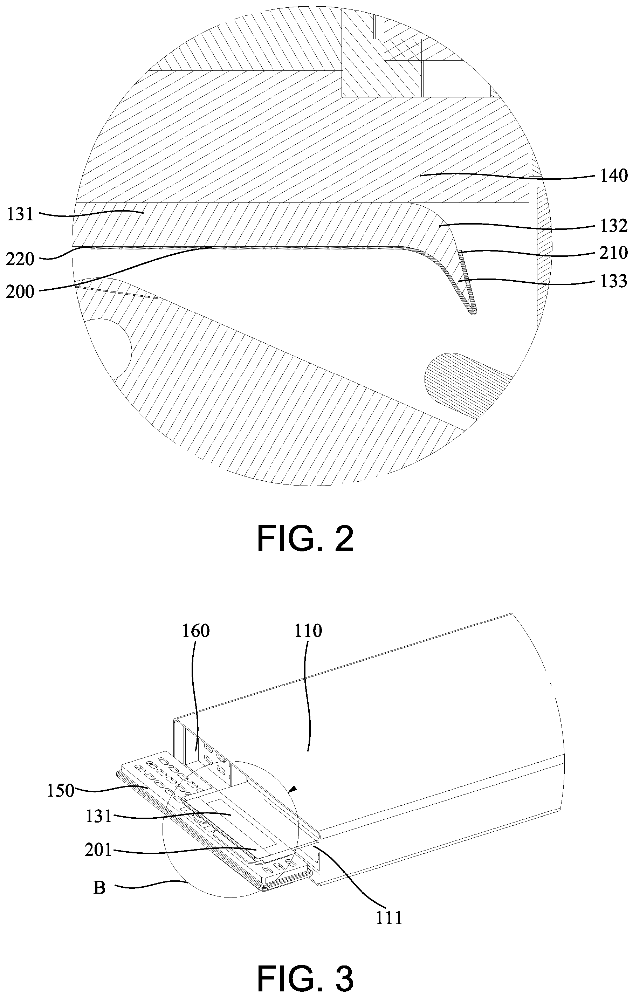

Referring to FIG. 1 and FIG. 3, FIG. 3 is a schematic view after welding of a first tab and a first terminal in the battery cell is completed according to an embodiment of the present disclosure. A receiving cavity is formed in the casing 110, a first opening 111 is located at one end of the receiving cavity, and the electrode assembly 130 is mounted in the receiving cavity through the first opening 111. The casing 110 may have various shapes, such as an approximately rectangular parallelepiped shape, an approximately cylindrical shape, an approximately prism shape, etc. The casing 110 may be made of various materials, such as copper, iron, aluminum, steel, aluminum alloy, etc. In order to prevent the casing 110 from rusting during long-term use, a surface of the casing 110 may also be plated with a layer of antirust material such as metal nickel.

Referring to FIG. 1 and FIG. 3, the first cover plate 120 is sealingly mounted on the first opening 111. A shape of the first cover plate 120 may be circular, rectangular, or other suitable shapes, as long as the first cover plate 120 may be fixedly mounted on the casing 110 and seals the first opening 111. To be specific, considering an overall volume, the shape of the first cover plate 120 is preferably similar to a shape of the first opening 111.

Referring to FIG. **1****,** the electrode assembly 130 is arranged in the casing 110, and the casing 110 may include one or more electrode assemblies 130. The electrode assembly 130 is mainly formed by winding or laminating a positive electrode sheet and a negative electrode sheet, and a separator is usually provided between the positive electrode sheet and the negative electrode sheet. The positive electrode sheet includes a positive current collector and a positive active material layer, and the positive active material layer is coated on a surface of the positive current collector. The positive current collector includes a positive coating region and a positive tab connected to the positive coating region. The positive coating region is coated with the positive active material layer, and the positive tab is not coated with the positive active material layer. The negative electrode sheet includes a negative current collector and a negative active material layer, and the negative active material layer is coated on a surface of the negative current collector. The negative current collector includes a negative coating region and a negative tab connected to the negative coating region. The negative coating region is coated with the negative active material layer, and the negative tab is not coated with the negative active material layer. Taking a lithium-ion battery as an example, a material of the positive current collector may be aluminum. The positive active material layer includes a positive active material, and the positive active material may be lithium cobalt oxide, lithium iron phosphate, ternary lithium, or lithium manganate. A material of the negative current collector may be copper. A negative active material layer includes a negative active material, and the negative active material may be carbon or silicon. A material of the separator may be polypropylene (PP) or polyethylene (PE), etc. In order to protect and insulate a cell, the cell may also be covered with an insulating film, and the insulating film may be made of PP, PE, PET, PVC, or other polymer materials.

Referring to FIG. 1, a first tab 131 extends from a side of the electrode assembly 130 close to the first cover plate 120, and first tab 131 may be the abovementioned positive tab or the abovementioned negative tab, which is not particularly limited herein. In this embodiment, the first tab 131 is a positive tab. At least part of the first tab 131 is conductively connected to the first terminal 140, and the first tab free end 132 is formed.

Referring to FIG. 1, the first insulating member 150 is mounted on a side of the first cover plate 120 close to the electrode assembly 130. A structure and a mounting approach of the first insulating member 150 are not limited, for example, a structure and a mounting approach of lower plastic in the existing battery cell 100 may be referred to, but not limited thereto. In this embodiment, the first terminal 140 is mounted through the first cover plate 120 and the first insulating member 150, and the first insulating member 150 may be any suitable type of insulating material, including but not limited to rubber and plastic.

Referring to FIG. 1, the first insulating support 160 is arranged between the first insulating member 150 and the electrode assembly 130 and specifically includes a surrounding side wall and a through hole corresponding to the position of the first tab 131, and the first tab 131 extends through the through hole and is conductively connected to the first terminal 140. The first insulating support 160 is also any suitable type of insulating material, and the specific material includes but not limited to rubber and plastic.

Referring to FIG. 1 and FIG. 2, FIG. 2 is an enlarged view of a region A in FIG. 1. The first tab free end 132 is covered with the insulating structure 200, and the insulating structure 200 increases an outer dimension of the first tab free end 132. As such, the possibility of the first tab free end 132 extending into the gap between the first insulating member 150 and the first insulating support 160 is lowered. Further, even if the first tab free end 132 extends into the gap between the first insulating member 150 and the first insulating support 160, the insulating structure 200 may also insulate and isolate the first tab free end 132 from the casing 110, so that battery safety problems such as short circuit may not occur.

Referring to FIG. 1 to FIG. 3, in an example of the battery cell of the present disclosure, the insulating structure 200 covers the first tab free end 132. The insulating structure 200 includes but not limited to an insulating tape 201, an insulating sleeve, an insulating coating and any other insulating materials. In the present disclosure, the insulating structure 200 adopts the insulating tape 201. The insulating tape 201 has low costs and good plasticity and may be conveniently attached to the first tab free end 132 of different shapes. In the present disclosure, the insulating tape 201 is adhered to the first tab free end 132, so the assembly is convenient.

Referring to FIG. 1 and FIG. 3, in an example of the battery cell of the present disclosure, a peel strength of the insulating tape 201 is preferably 9 N/mm to 18 N/mm, for example, it may be any value within the range of 9 N/mm to 18 N/mm, such as 9 N/mm, 12 N/mm, 15 N/mm, 18 N/mm, etc. When the peel strength of the insulating tape 201 is less than 9 N/mm, an adhering strength between the insulating tape 201 and the first tab free end 132 is insufficient, and peeling is likely to occur. As such, the risk of the first tab free end 132 extending into the first insulating member 150 and the first insulating support 160 increases. When the peel strength of the insulating tape 201 is greater than 18N/mm, the costs of the insulating tape 201 are excessively high, so the costs of the battery cell 100 increase.

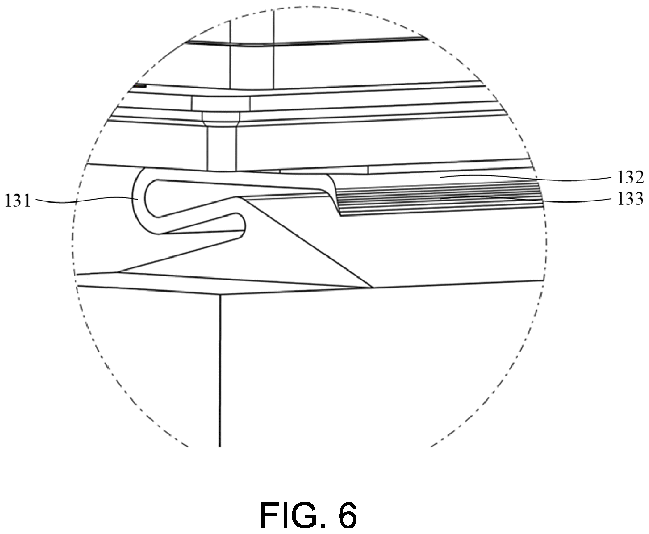

Referring to FIG. 1 and FIG. 6, FIG. 6 is a structural schematic view of a staggered region in the battery cell according to an embodiment of the present disclosure. In an example of the battery cell of the present disclosure, the first tab free end 132 includes a staggered region 133, a plurality of positive electrode sheets are wound or stacked to form the first tab 131, and the dimensional differences of free ends of the plurality of positive electrode sheets form the staggered region 133 of the first tab free end 132. The insulating tape 201 covers the staggered region 133 in an extending direction of the first tab free end 132, so that the free ends of all positive electrode sheets constituting the first tab 131 are protected by insulation.

Referring to FIG. 1, FIG. 2, and FIG. 7, FIG. 7 is a structural schematic view of a first tab free end covered with an insulating tape in the battery cell according to an embodiment of the present disclosure. In an example of the battery cell of the present disclosure, one end 210 of the insulating tape 201 is adhered to a surface of the first tab free end 132 close to the first terminal 140, and another end 220 of the insulating tape 201 is adhered to a surface of the first tab 131 away from the first terminal 140 and close to a root portion of the first tab 131. After the one end 210 of the insulating tape 201 is adhered to the surface of the first tab free end 132 close to the first terminal 140, the insulating tape 201 bypasses the first tab free end 132 so that the another end 220 of the insulating tape 201 is adhered to the surface of the first tab 131 away from the first terminal 140, so as to form a covering on the first tab free end 132. Meanwhile, during the adhering process of the insulating tape 201, the insulating tape 201 is used to constrain the orientation of the first tab free end 132, so that the first tab free end 132 is oriented to avoid the location of the gap between the first insulating member 150 and the first insulating support 160, and that the possibility of the first tab free end 132 contacting the casing 110 is further reduced.

Referring to FIG. 1 to FIG. 3, in an example of the battery cell of the present disclosure, a connection region between the first tab 131 and the first terminal 140 is a connection zone. The first tab 131 further includes an ultrasonic pre-welding zone, the positive electrode sheets are connected by ultrasonic pre-welding, and this welding region is the ultrasonic pre-welding zone. In order to make the current path shortest and the loss minimum when the battery cell 100 is in operation, the connection zone includes the ultrasonic pre-welding zone. On a connection surface between the first tab 131 and the first terminal 140, an orthographic projection of the connection zone is within an orthographic projection of the insulating tape 201, that is, the another end 220 of the insulating tape 201 extends toward the root portion of the first tab 131, at least covering the corresponding region of the connection zone on the surface of the first tab 131 away from the first terminal 140, so protection is protected for this region. Further, an adhering area between the insulating tape 201 and the first tab 131 increases, and the adhering strength is ensured, so the effectiveness of the constraint of the insulating tape 201 on the extending direction of the first tab free end 132 is further ensured.

Referring to FIG. 1, FIG. 3, and FIG. 4, FIG. 4 is an enlarged view of a region B in FIG. 3. In an example of the battery cell of the present disclosure, in a direction perpendicular to an extending direction of the first tab 131, a width D₁ of the insulating tape 201 is greater than a width D₂ of the first tab 131. When the first tab 131 extends into the gap between the first insulating support 160 and the first insulating member 150, the casing 110 is located in the extending direction of the first tab 131, and the insulating tape 201 may effectively insulate and isolate the first tab free end 132 from the casing 110 only when the width D₁ of the insulating tape 201 is not less than the width D₂ of the first tab 131. In this embodiment, making the width D₁ of the insulating tape 201 greater than the width D₂ of the first tab 131 may further ensure that an edge in the width D₂ direction of the first tab free end 132 is also within the insulating and isolating range of the insulating tape 201, and the safety of the battery cell 100 is thus further ensured.

Referring to FIG. 1, in an example of the battery cell of the present disclosure, the first insulating support 160 includes a first tab gathering structure 170. The first tab gathering structure 170 orderly stacks and gathers a non-welding region of the first tab 131, so that the position of the first tab 131 inside the battery cell 100 remains stable.

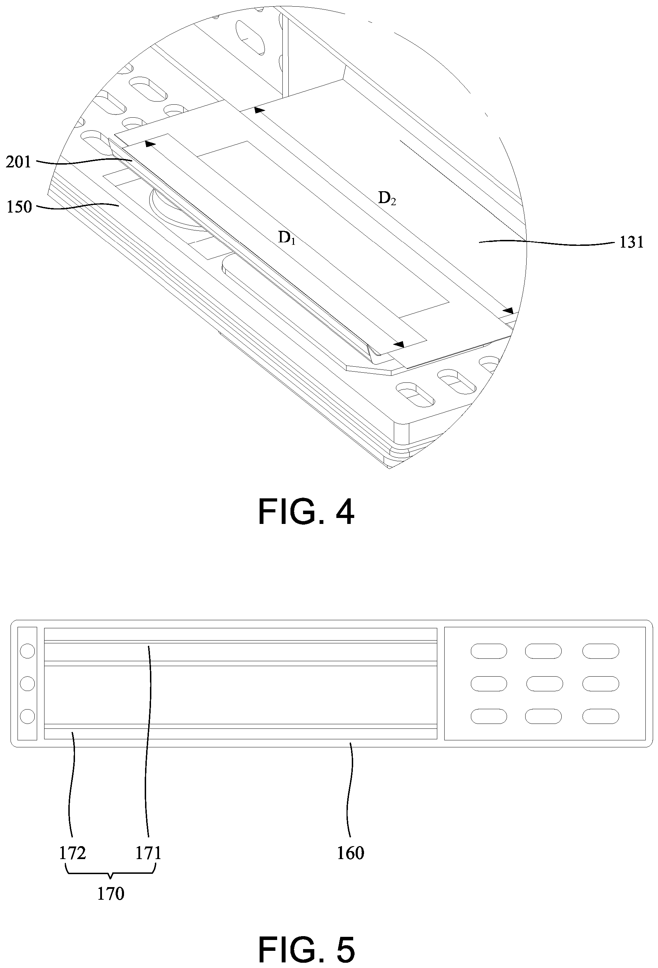

Referring to FIG. 1 and FIG. 5, FIG. 5 is a front view of a first insulating support in the battery cell according to an embodiment of the present disclosure. In an example of the battery cell of the present disclosure, as long as the positioning of the first tab 131 may be achieved, the first tab gathering structure 170 may be in various forms. In an example of the battery cell of the present disclosure, the first tab gathering structure 170 includes a first protruding portion 171 away from the first tab free end 132, the first protruding portion 171 is connected to the first insulating support 160 and extends toward the side of the first tab free end 132. The first protruding portion 171, the first insulating support 160, and the first terminal 140 form a first groove 173, so that the first tab 131 may be tightly fixed between the first insulating support 160 and the first terminal 140 when being gathered and bent.

Referring to FIG. 1 and FIG. 5, in an example of the battery cell of the present disclosure, the first tab gathering structure 170 further includes a second protruding portion 172 arranged on an opposite side of the first protruding portion 171, and a root portion of the second protruding portion 172 is connected to the first insulating support 160 and extends toward the side of the first protruding portion 171. The second protruding portion 172, the first insulating support 160, and the first terminal 140 form a second groove 174. In this embodiment, the extending direction of the first tab free end 132 with the insulating tape 201 is constrained to the direction of reverse insertion toward the electrode assembly 130. The second groove 174 may gather the reverse-inserted first tab free end 132 to protect the electrode assembly 130.

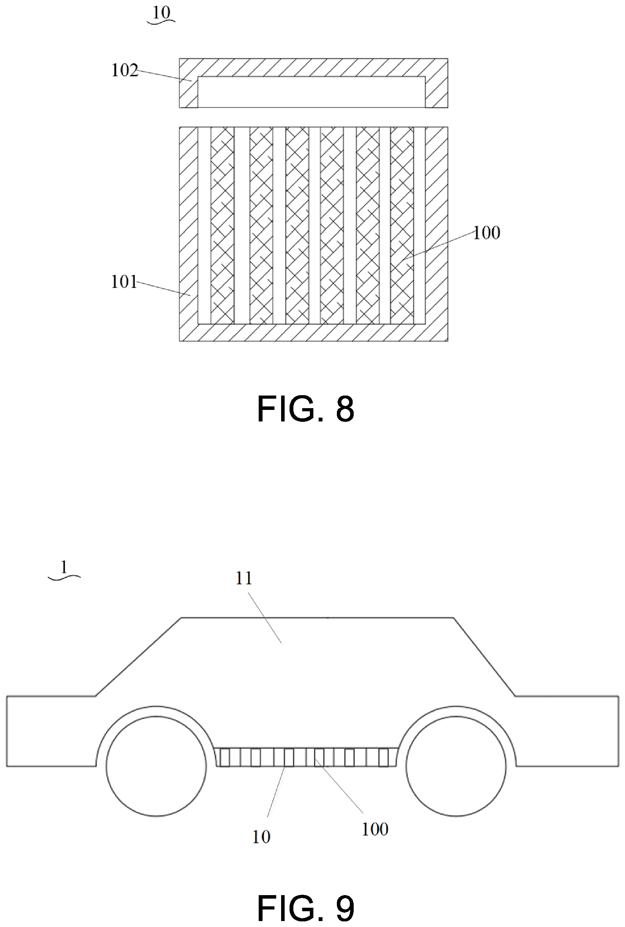

Referring to FIG. 8, FIG. 8 is a structural schematic view of a battery according to an embodiment of the present disclosure. The present disclosure also provides a battery 10, and the battery 10 includes the battery cell 100 of any of the above. The battery 10 may be a battery module, a battery block, or a battery pack, but it is not limited thereto. In an embodiment of the present disclosure, the battery 10 includes a box body 101 and at least one battery cell 100. The box body 101 includes the box body 101 and a box cover 102, and the box body 101 and the box cover 102 are covered with each other to form an accommodating space. A plurality of battery cells 100 are accommodated in the accommodating space, and the plurality of battery cells 100 may be connected in series and/or in parallel.

Referring to FIG. 9, FIG. 9 is a structural schematic view of an electric device according to an embodiment of the present disclosure. The present disclosure also provides an electric device 1, and the electric device 1 may be a vehicle, a mobile phone, a portable device, a notebook computer, a ship, a spacecraft, an electric toy, an electric tool, etc. The vehicle may be but not limited to a fuel vehicle, a gas vehicle, or a new energy vehicle, and the new energy vehicle may be a pure electric vehicle, a hybrid vehicle, or a range-extended vehicle, etc. The spacecraft includes but not limited to an airplane, a rocket, a space shuttle, a spaceship, etc. The electric toy includes but not limited to a stationary or mobile electric toy, for example, a game machine, an electric car toy, an electric boat toy, an electric airplane toy, etc. The electric tool includes but not limited to a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc.

In the electric device 1 of the present disclosure, the electric device 1 includes a working portion 11 and the battery 10, and the working portion 11 is electrically connected to the battery 10, so as to obtain electrical energy support. The working portion 11 may be a unit component that can obtain the electric energy of the battery 10 and perform corresponding work, such as a blade rotating unit of a fan, a dust collection working unit of a vacuum cleaner, a wheel drive unit in an electric vehicle, etc. The above electric device 1 is not particularly limited in the embodiments of the present disclosure.

Referring to FIG. 9, in the electric device 1 according to an embodiment of the present disclosure, the electric device 1 is a vehicle, the working portion 11 is a vehicle body of the vehicle, and the battery 10 is fixedly mounted on the vehicle body to provide driving force for the vehicle to achieve the operation of the vehicle.

In the battery cell, the battery, and the electric device of the present disclosure, the first tab free end is covered with the insulating structure. On one hand, the insulating structure may reduce the possibility of the first tab free end extending into the gap between the first insulating member and the first insulating support. On the other hand, even if the first tab free end extends into the gap between the first insulating member and the first insulating support, the insulating structure may also insulate and isolate the first tab free end from the casing. Further, through the arrangement of the structure, a tab cutting process is no longer required. In this way, the problems of debris generated from cutting redundant tabs damaging the internal structure of the battery cell and causing short circuit are avoided, production costs are reduced, and safety performance of the battery is improved. The battery and the electric device of the of the present disclosure include the battery cell of the present disclosure, so that improved safety performance is provided, and the production costs are reduced. Therefore, some practical problems in the related art are effectively overcome, so that the present disclosure exhibits high utilization value and use significance. The above-mentioned embodiments only illustrate the principles and effects of the present disclosure, but are not intended to limit the present disclosure. A person having ordinary skill in the art can modify or change the abovementioned embodiments without departing from the spirit and scope of the present disclosure. Therefore, all equivalent modifications or changes made by a person having ordinary skill in the art without departing from the spirit and technical ideas disclosed in the present disclosure shall still be covered by the claims of the present disclosure.

## Claims

1. A battery cell (100), **characterized by** comprising:
a casing (110), the casing (110) comprising a first opening (111);
a first cover plate (120), sealingly mounted on the first opening (111);
a first terminal (140), mounted on the first cover plate (120);
an electrode assembly (130), arranged in the casing (110), wherein a first tab (131) extends from a side close to the first cover plate (120), at least part of the first tab (131) is fixedly connected to the first terminal (140), and a first tab free end (132) is formed;
a first insulating member (150), mounted on a side of the first cover plate (120) close to the electrode assembly (130); and
a first insulating support (160), arranged between the first insulating member (150) and the electrode assembly (130),
wherein the first tab free end (132) is provided with an insulating structure (200).

2. The battery cell (100) according to claim 1, **characterized in that** the insulating structure (200) covers the first tab free end (132).

3. The battery cell (100) according to claim 2, **characterized in that** the insulating structure (200) comprises an insulating tape (201), and the insulating tape (201) is adhered to the first tab free end (132).

4. The battery cell (100) according to claim 3, **characterized in that** a peel strength of the insulating tape (201) is 9 N/mm to 18 N/mm.

5. The battery cell (100) according to claim 3, **characterized in that** the first tab free end (132) comprises a staggered region (133), and the insulating tape (201) covers the staggered region (133).

6. The battery cell (100) according to claim 3, **characterized in that** one end (210) of the insulating tape (201) is adhered to a surface of the first tab free end (132) close to the first terminal (140), and another end (220) of the insulating tape (201) is adhered to a surface of the first tab (131) away from the first terminal (140) and close to a root portion of the first tab (131).

7. The battery cell (100) according to claim 3, **characterized in that** a connection region between the first tab (131) and the first terminal (140) is a connection zone, and on a connection surface of the first tab (131) and the first terminal (140), an orthographic projection of the connection zone is within an orthographic projection of the insulating tape (201).

8. The battery cell (100) according to claim 3, **characterized in that** in a direction perpendicular to an extending direction of the first tab (131), a width D₁ of the insulating tape (200) is greater than a width D₂ of the first tab (131).

9. The battery cell (100) according to claim 1, **characterized in that** the first insulating support (160) comprises a first tab gathering structure (170).

10. The battery cell (100) according to claim 9, **characterized in that** the first tab gathering structure (170) comprises a first protruding portion (171), and the first protruding portion (171) extends from a side of the first insulating support (160) away from the first tab free end (132) toward a side close to the first tab free end (132).

11. A battery, comprising the battery cell (100) according to any one of claims 1 to 10.

12. An electric device, comprising the battery cell (100) according to any one of claims 1 to 10.
